# EUROPEAN PATENT APPLICATION

(11) **EP 1 630 500 A2**
(43) Date of publication of application: **01.03.2006**
(21) Application number: 05016893.9
(22) Date of filing: 03.08.2005
(51) Int. Cl.: F25D 17/04, F25D 27/00

(54) **Refrigerator**

(30) Priority: 26.08.2004 KR 2004067629; 19.05.2005 KR 2005042063
(71) Applicant: SAMSUNG ELECTRONICS CO., LTD., Suwon-si, Gyeonggi-do (KR)
(72) Inventor: The designation of the inventor has not yet been filed
(74) Representative: Grünecker, Kinkeldey, Stockmair & Schwanhäusser Anwaltssozietät

(57) **Abstract**

A refrigerator having a vegetable storage chamber (124) for maintaining freshness of vegetables stored therein for a long time and minimizing nutrient degradation of the vegetables. When a large quantity of vegetables are stacked and stored in the vegetable storage chamber, sufficient light reaches the vegetables located at inner and lower parts of the vegetable storage chamber, thereby facilitating photosynthesis of the vegetables. The refrigerator includes the vegetable storage chamber to store vegetables, light emitting diodes (LEDs) (128) to irradiate light onto the vegetables stored in the vegetable storage chamber so that the vegetables photosynthesize, and a control unit (202) to receive data corresponding to types of the stored vegetables and to control the LEDs so that the LEDs emit light, having characteristics corresponding to the types of the stored vegetables, onto the vegetables.

## Description

### BACKGROUND OF THE INVENTION

### 1. Field of the Invention

The present invention relates to a refrigerator, and more particularly, to a refrigerator, which includes a separate vegetable storage chamber for storing vegetables.

### 2. Description of the Related Art

In a conventional refrigerator having at least two storage chambers, the storage chambers are divided by an intermediate wall, and are respectively opened and closed by doors. An evaporator for generating cold air and a fan for blowing the generated cold air to the inside of the corresponding one of the storage chambers are installed in each of the storage chambers. The storage chambers are independently cooled by the action of the corresponding evaporators and fans. This method is referred as an independent cooling method.

In a conventional refrigerator having a freezing chamber and a refrigerating chamber, the freezing chamber serves to store frozen foods, and has a temperature of approximately - 18°C. On the other hand, the refrigerating chamber serves to store foods, which do not require freezing, at a normal temperature of more than 0°C, particularly, at a temperature of approximately 3°C.

When vegetables are stored at a comparatively low temperature, the vegetables can maintain freshness for a long time compared to vegetables stored at the normal temperature. Although the storage at the low temperatre allows vegetables to maintain freshness tor a long time, many nutrients of the vegetables, which were stored at the low temperature, are destroyed, and a time for maintaining the freshness of the vegetables is comparatively short.

### SUMMARY OF THE INVENTION

Accordingly, it is an aspect of the present invention to provide a refrigerator including a vegetable storage chamber for maintaining freshness of vegetables for a long time and minimizing nutrient degradation of the vegetables.

Additional aspects and/or advantages of the invention will be set forth in part in the description which follows and, in part, will be apparent from the description, or may be learned by practice of the invention.

These and/or others aspects and advantages of the present invention are achieved by providing a refrigerator including a vegetable storage chamber to store vegetables, light emitting diodes (LEDs) to irradiate light onto the vegetables stored in the vegetable storage chamber so that the vegetables photosynthesize, and a control unit to receive data corresponding to types of the stored vegetables and to control the LEDs so that the LEDs emit light, having characteristics corresponding to the types of the stored vegetables, onto the vegetables.

In an embodiment of the present invention, the light emitted from the LEDs is green light, and the green light includes a wavelength of approximately 480∼660nm.

Further, the light emitted from the LEDs is red light, and the red light includes a wavelength of approximately 720nm.

The light emitted from the LEDs includes different colors according to the types of the vegetables stored in the vegetable storage chamber.

The control unit controls the LEDs so that the LEDs emit light having a wavelength, a light intensity, and an irradiation time, corresponding to the types of the stored vegetables, onto the vegetables.

The refrigerator further includes a moisture supply device to supply moisture to the vegetables stored in the vegetable storage chamber.

The refrigerator further includes a light-setting unit to receive data regarding the kinds of the stored vegetables from a user.

The LEDs are arranged on internal surfaces of the vegetable storage chamber, to emit light.

Further, the vegetable storage chamber is divided into at least two spaces, and lights at different wavelengths are emitted onto the divided spaces.

It is another aspect of the present invention to provide a refrigerator including a vegetable storage chamber to store vegetables, a plurality of different single-colored light emitting diodes (LEDs) to irradiate light onto the vegetables stacked and stored in the vegetable storage chamber so that all the stored vegetables photosynthesize, a light-setting unit to receive data corresponding to types of the stored vegetables from a user, and a control unit to receive the data corresponding to the types of the stored vegetables through the light-setting unit and to control the LEDs so that the LEDs emit light, having characteristics corresponding to the types of the stored vegetables, onto the vegetables.

Each of the LEDs is selected from a group consisting of a green-colored LED for irradiating green light and a red-colored LED for irradiating red light, the green light includes a wavelength of approximately 480-660 nm,and the red light includes a wavelength of approximately 720 nm.

Further, the control unit selectively controls at least one type of the LEDs, intensities of lights emitted from the LEDs, and irradiation times of the LEDs, according to the types of the stored vegetables.

The refrigerator further includes a moisture supply device to supply moisture to the vegetables stored in the vegetable storage chamber.

The LEDs are arranged on at least parts of circumferential surfaces of the vegetable storage chamber.

Further, the vegetable storage chamber is divided into at least two spaces, and the single-colored LEDs for irradiating different lights are respectively installed in the divided spaces.

It is another aspect of the present invention to provide a refrigerator including a vegetable storage chamber to store vegetables under a condition that the vegetables are stacked, a plurality of green-colored and red-colored light emitting diodes (LEDs) to irradiate light onto the vegetables stored in the vegetable storage chamber so that nutrients are properly formed in all the stored vegetables, a light-setting unit to receive data corresponding to types of the stored vegetables from a user, and a control unit to receive the data corresponding to the types of the stored vegetables through the light-setting unit and to control the LEDs so that the LEDs emit light at wavelengths, corresponding to the types of the stored vegetables, onto the vegetables.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a longitudinal sectional view illustrating a refrigerator in accordance with an embodiment of the present invention;
FIG. 2 is a block diagram illustrating a system for controlling the refrigerator of FIG. 1;
FIG. 3 is a perspective view illustrating an embodiment of a vegetable storage chamber of the refrigerator of FIG. 1;
FIG. 4 is a perspective view illustrating another embodiment of the vegetable storage chamber of the refrigerator of FIG. 1;
FIGS. 5A to 5C are graphs illustrating variations of moisture contained in vegetables, obtained by a vegetable storage test using the vegetable storage chamber of the refrigerator in accordance with an embodiment of the present invention;
FIGS. 6A to 6C are graphs illustrating variations of crude protein contained in vegetables, obtained by the vegetable storage test using the vegetable storage chamber of the refrigerator in accordance with an embodiment of the present invention;
FIGS. 7A to 7C are graphs illustrating variations of crude fiber contained in vegetables, obtained by the vegetable storage test using the vegetable storage chamber of the refrigerator in accordance with an embodiment of the present invention; and
FIGS. 8A to 8C are graphs illustrating variations of vitamin C contained in vegetables, obtained by the vegetable storage test using the vegetable storage chamber of the refrigerator in accordance with an embodiment of the present invention.

### DETAILED DESCRIPTION OF THE PREFERRED EMBODIMENTS

Reference will now be made in detail to the embodiment of the present invention, examples of which are illustrated in the accompanying drawings, wherein like reference numerals refer to like elements throughout. The embodiments are described below to explain the present invention by referring to the figures.

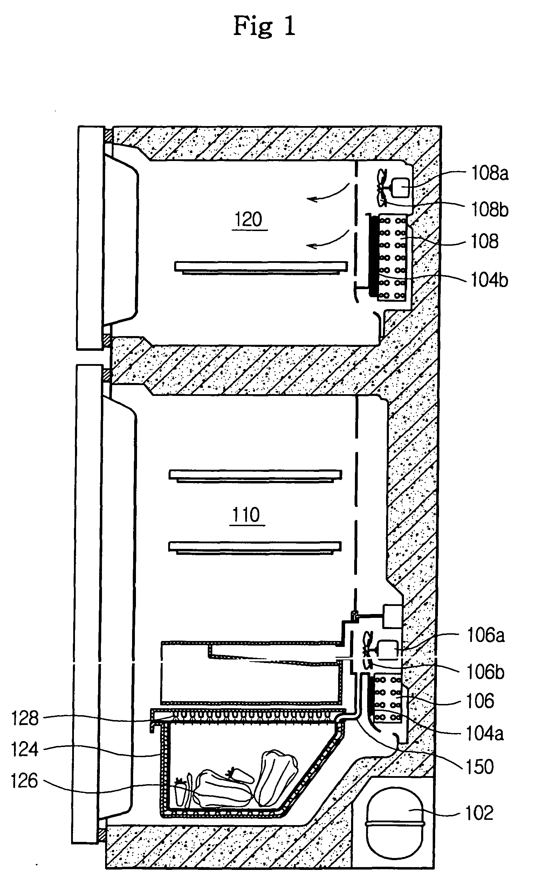

Hereinafter, an embodiment of the present invention will be described with reference to FIGS. 1 to 8. FIG. 1 is a longitudinal sectional view illustrating a refrigerator in accordance with an embodiment of the present invention. As shown in FIG. 1, a refrigerating chamber evaporator 106, a refrigerating chamber fan motor 106a, a refrigerating chamber fan 106b, and a defrosting heater 104a are installed in a refrigerating chamber 110. A freezing chamber evaporator 108, a freezing chamber fan motor 108a, a freezing chamber fan 108b, and a defrosting heater 104b are installed in a freezing chamber 120. The defrosting heaters 104a and 104b serve to respectively defrost the surfaces of the refrigerating and freezing chamber evaporators 106 and 108.

Cold air generated from the refrigerating chamber evaporator 106 is blown to an inside of the refrigerating chamber 110 by the refrigerating chamber fan 106b. Cold air generated from the freezing chamber evaporator 108 is blown to an inside of the freezing chamber 120 by the freezing chamber fan 108b. Expansion devices (not shown) for decompressing and expanding refrigerant are respectively installed at inlets of the refrigerating and freezing chamber evaporators 106 and 108, and a condenser (not shown) is installed at an outlet of a compressor 102.

A vegetable storage chamber 124 is installed at a lower part of the refrigerating chamber 110, and a plurality of light sources 128 are installed on each of surfaces of the vegetable storage chamber 124. Light emitting diodes (LEDs) are used as the light sources 128 so as to adjust the frequency and the quantity of emitted light.

Generally, moisture is not supplied from an outside to an inside of the vegetable storage chamber of the refrigerating chamber, i.e., a vegetable chamber of the refrigerating chamber. In order to photosynthesize to produce nutrients and thus to grow, vegetables use moisture contained therein. Accordingly, as time goes by, moisture contained in the vegetables decreases. In this case, when photosynthesis conditions similar to those, which grow vegetables on soil outside the refrigerator, are provided in the refrigerator, these conditions dry vegetables stored in the vegetable storage chamber, thereby deteriorating the freshness of the vegetables.

Colors of absorbed light at wavelengths for causing the photosynthesis of green vegetables are usually blue and red, and small amounts of remaining wavelengths shorter than blue and red wavelengths are also absorbed by the green vegetables. Accordingly, in order to grow green vegetables on the bare ground, blue and red wavelength bands are mainly used. However, when blue and red wavelength bands are used in a closed environment in which vegetables are stacked and stored, such as the storage chamber of the refrigerator, only leaves of the outermost vegetable out of the stacked and stored vegetables vigorously photosynthesize and the internal vegetables cannot photosynthesize. Accordingly, light sources for irradiating light, which is transmitted and reflected by the stacked vegetables, and produce a proper quantity of nutrients for maintaining the freshness of the vegetables, are required. Green light is proper to satisfy the above requirements. In the same manner, yellow light is transmitted and reflected by yellow vegetables, such as carrots.

In the refrigerator in accordance with the embodiment of the present invention, the light sources 128 emit one of green or red light onto the vegetable storage chamber 124, or emit green light onto one portion of the vegetable storage chamber 124 and red light onto the other portion of the vegetable storage chamber 124 according to types of the stored vegetables (i.e., green or red vegetables). When the light sources 128 are controlled such that the light sources 128 emit light at a wavelength of 480-660 nm, the light sources 128 generate green light, and when the light sources 128 are controlled such that the light sources 128 emit light at a wavelength of approximately 720 nm, the light sources 128 generate red light.

The light emitted from the light sources 128 causes vegetables 126, stored in the vegetable storage chamber 124, to perform chemical reaction (for example, photosynthesis). In the refrigerator in accordance with the embodiment of the present invention, the vegetables 126, which are stored in the vegetable storage chamber 124, obtain nutrients by means of the chemical reaction induced by the light emitted from the light sources 128, thus being capable of being maintained in a fresh state for a long time and minimizing nutrient degradation.

When a large quantity of green light at a wavelength of 480-660 nm is transmitted or reflected by the green vegetables 126, a part of the green light is absorbed by the green vegetables 126. Accordingly, although a large quantity of the vegetables 126 are stacked in the vegetable storage chamber 124, the green light emitted from the light sources 128 reaches the vegetables 126, which are located inside, as well as the vegetables 126, which are located at the outer surface, and induces photosynthesis of the vegetables 126. That is, the green light allows all the vegetables 126, stored in the vegetable storage chamber 124, to perform the chemical reaction (photosynthesis).

In order to induce photosynthesis of the vegetables 126 stored in the vegetable storage chamber 124, light and moisture are required. Since other moisture except for moisture contained in the vegetables 126 is not supplemented, cold air containing moisture, which is generated by defrosting the surface of the refrigerating chamber evaporator 106, may be supplied to the vegetable storage chamber 124 through a moisture supply pipe 150 by driving the refrigerating chamber fan 106b, or necessary moisture may be supplied from a separate moisture supply unit to the vegetable storage chamber 124.

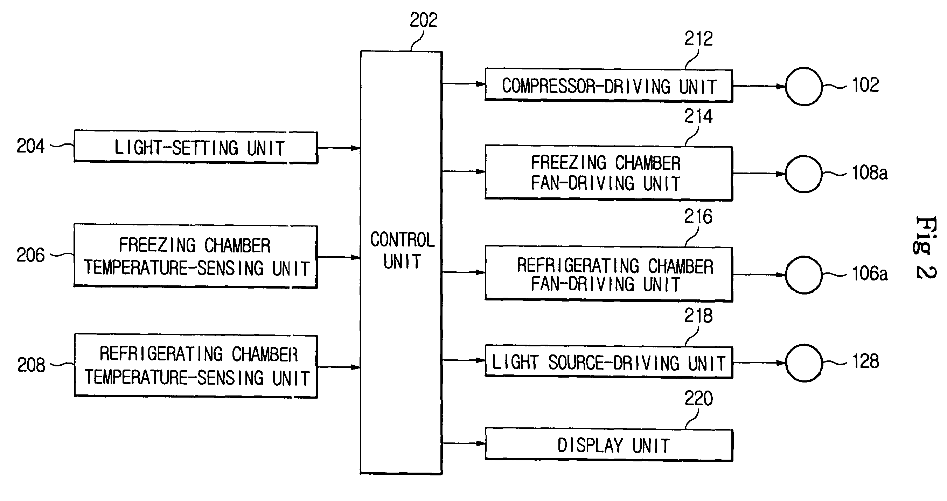

FIG. 2 is a block diagram illustrating a system for controlling the refrigerator of FIG. 1. As shown in FIG. 2, a light-setting unit 204, a freezing chamber temperature-sensing unit 206, and a refrigerating chamber temperature-sensing unit 208 are connected to an input port of a control unit 202. The light-setting unit 204 allows a user to input data corresponding to types of the vegetables 126 stored in the vegetable storage chamber 124, thereby causing the user to set characteristics (wavelength, light intensity, and irradiation time) of light emitted from the light sources 128 correspondingly to the types of the vegetables 126 based on the data. The freezing chamber temperature-sensing unit 206 and the refrigerating chamber temperature-sensing unit 208 respectively sense temperatures in the freezing chamber 120 and the refrigerating chamber 110, and then supply the sensed temperatures to the control unit 202.

A compressor-driving unit 212, a freezing chamber fan-driving unit 214, a refrigerating chamber fan-driving unit 216, a light source-driving unit 218, and a display unit 220 are connected to an output port of the control unit 202. The compressor-driving unit 212, the freezing chamber fan-driving unit 214, the refrigerating chamber fan-driving unit 216, and the light source-driving unit 218 respectively drive the compressor 102, the freezing chamber fan motor 108a, the refrigerating chamber fan motor 106a, and the light sources 128. The light source-driving unit 218 drives the light sources 128 so that the light sources 128 emit light having characteristics (frequency, brightness, and irradiation time) corresponding to values set by the user through the light-setting unit 204. The display unit 220 displays operating states of the refrigerator, and various predetermined values and temperatures according to the data corresponding to types of the vegetables 126 stored in the vegetable storage chamber 126, and particularly displays the characteristics (frequency, brightness, and irradiation time) of the light emitted from the light sources 128 according to the values set by the user through the light-setting unit 204.

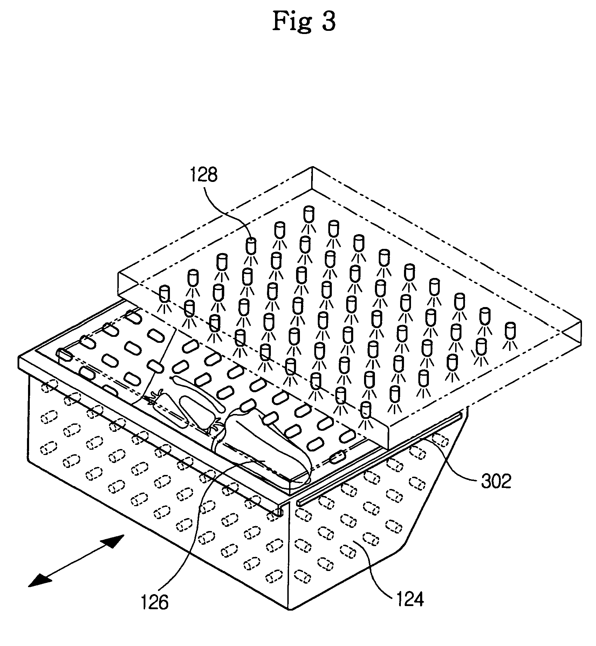

FIG. 3 is a perspective view of one embodiment of the vegetable storage chamber of the refrigerator of FIG. 1. Although not shown in the drawings, the light sources 128 are electrically connected with the control unit 202 through the light source-driving unit 218, and receive control signals and power from the control unit 202. As shown in FIG. 3, a plurality of the light sources 128 are installed on each of the surfaces of the vegetable storage chamber 124 so that a large quantity of light can be emitted onto all surfaces of the vegetables 126 stored in the vegetable storage chamber 124. However, the light sources 128 may be installed on one side surface of the vegetable storage chamber 124 according to characteristics of the light sources 128. Guides 302 are installed on both side surfaces of the vegetable storage chamber 124 so that the vegetable storage chamber 124 slides forwards and backwards in the refrigerator.

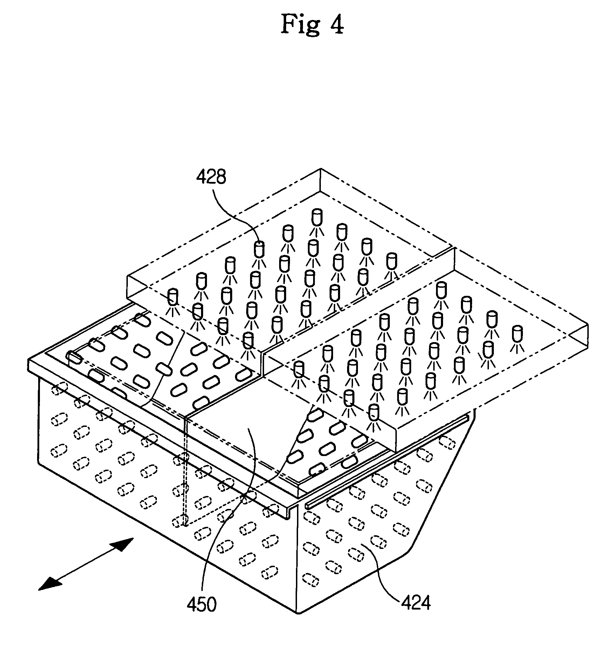

FIG. 4 is a perspective view illustrating another embodiment of the vegetable storage chamber of the refrigerator of FIG. 1. As shown in FIG. 4, a partition 450 to divide the internal space of a vegetable storage chamber 424 into at least two spaces is installed in the vegetable storage chamber 424. Different colored vegetables (for example, green vegetables, such as lettuce, and red vegetables, such as carrots) are respectively stored in the two spaces, and wavelengths (or frequencies) of light emitted from the light sources 428 are controlled so that green light is emitted onto the space storing the green vegetables and red light is emitted onto the space storing the red vegetables). As described above, different colored lights are emitted onto the spaces according to the colors of the vegetables stored in the spaces, thereby maintaining the freshness of the vegetables for a long time and minimizing the nutrient degradation of the vegetables even when different colored vegetables are stored in the spaces.

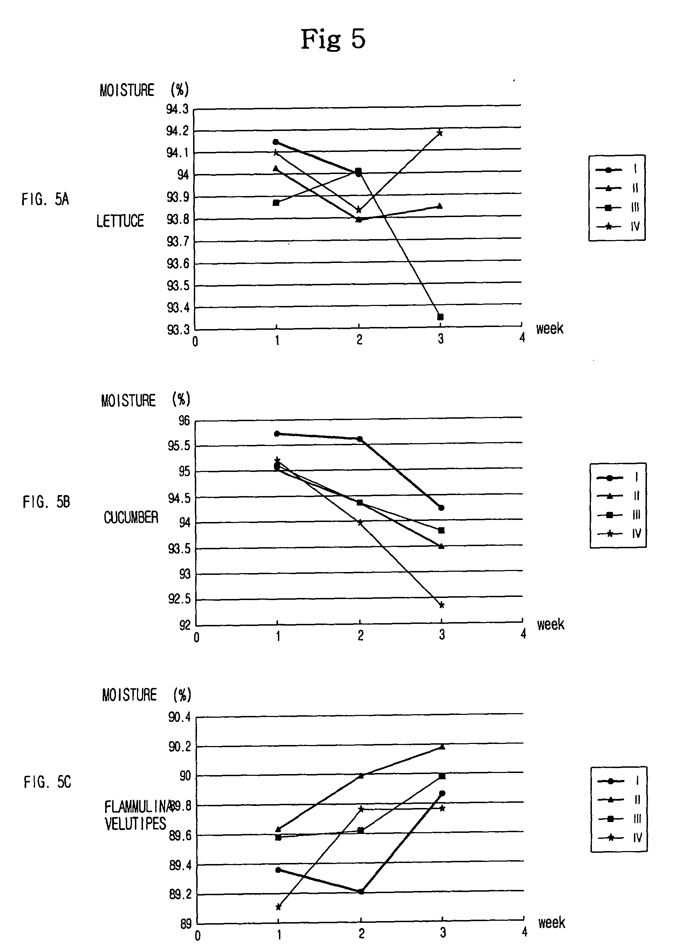

FIGS. 5A to 8C are graphs illustrating results of a vegetable storage test using the vegetable storage chamber of the refrigerator in accordance with the embodiment of the present invention. The above test was performed under the conditions below.

**Table 1. Test materials**

| | |
|---|---|
| Division | Storage method |
| Lettuce | Stored in transparent plastic bag |
| Cucumber | Stored without packing |
| Flammulina velutipes | Stored in transparent plastic bag |

**Table 2. Test conditions**

| | |
|---|---|
| Division | Conditions |
| Light source | Green |
| Light intensity | 500 lux, 1,100 lux, 1,700 lux, 0 lux (dark) |
| Test temperature | 4°C (± 1°C) |
| Test humidity | 60% (± 5%) |
| Test period | Three weeks (sampling weekly) |

**Table 3. Division of light intensities**

| Division | Condition | | | |
|---|---|---|---|---|
| | I | II | III | IV |
| Light source | Green | | | Dark |
| Light intensity | 500 lux | 1,100 lux | 1,700 lux | 0 lux |

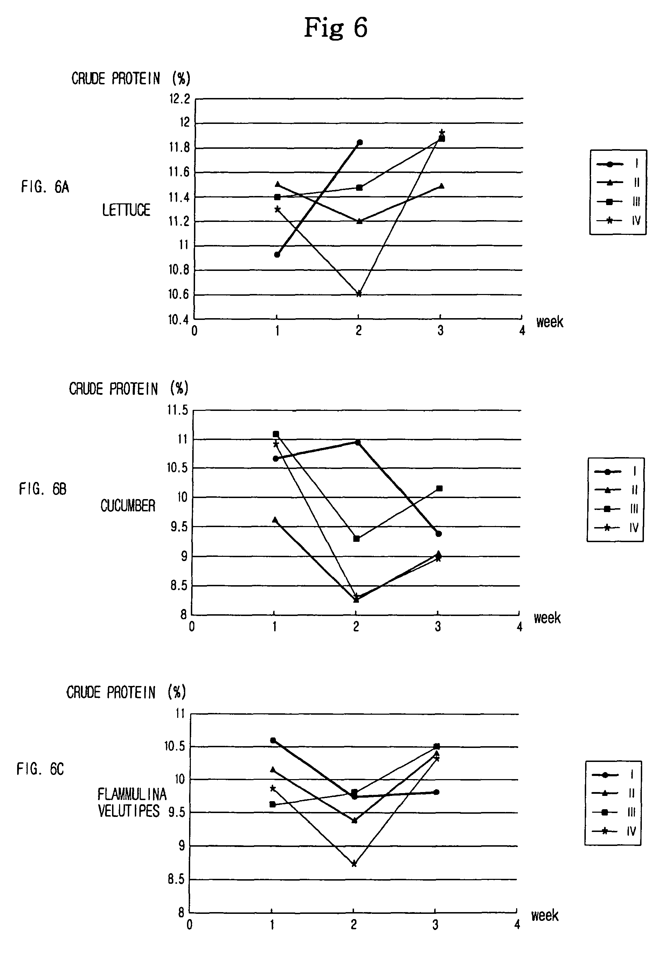

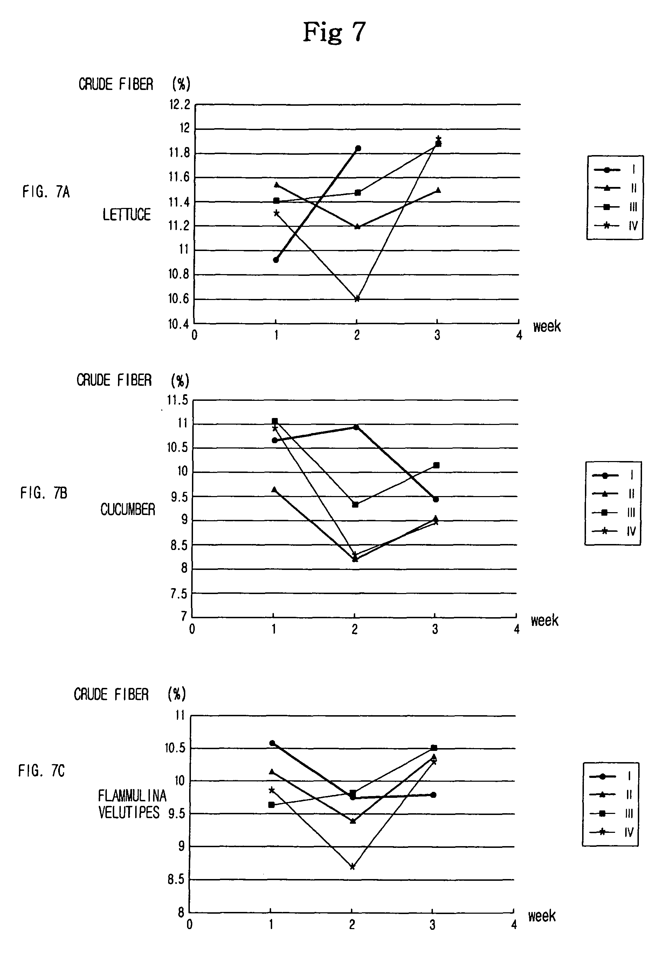

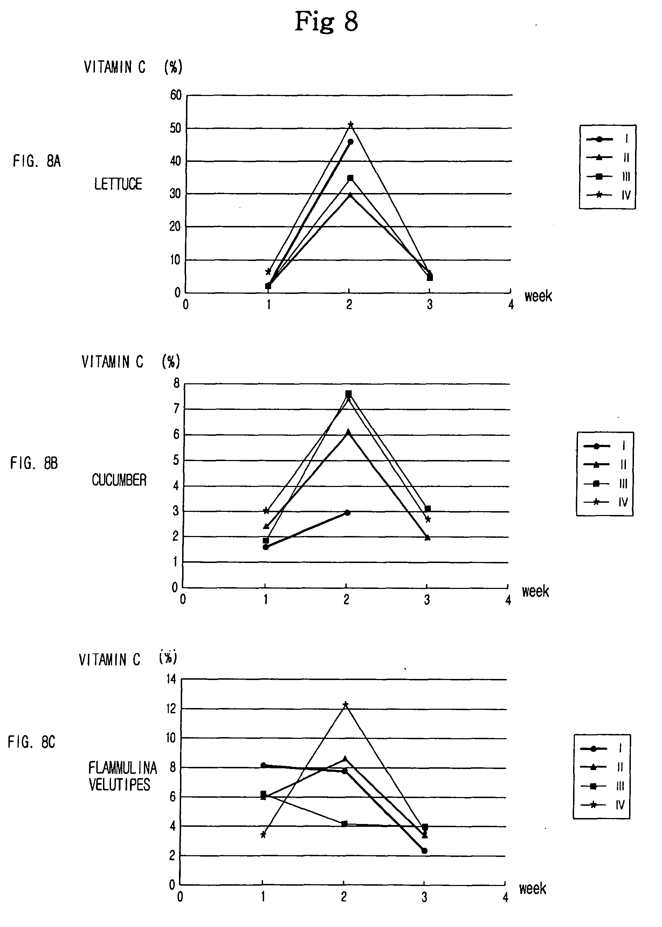

FIGS. 5A to 8C are graphs illustrating variations of moisture contained in vegetables (FIGS. 5A to 5C), variations of crude protein contained in vegetables (FIGS. 6A to 6C), variations of crude fiber contained in vegetables (FIGS. 7A to 7C), and variations of vitamin C contained in vegetables (FIGS. 8A to 8C), obtained by the vegetable storage test using the vegetable storage chamber of the refrigerator in accordance with the embodiment of the present invention. The test conditions are as described in the above Tables.

For example, as shown in FIGS. 5A to 8C, lettuce (with reference to FIGS. 5A, 6A, 7A, and 8A), cucumber (with reference to FIGS. 5B, 6B, 7B, and 8B), and Flammulina velutipes (with reference to FIGS. 5C, 6C, 7C, and 8C) were stored in the vegetable storage chamber 214 in accordance with the embodiment of the present invention, and their changed states were observed. Although the above vegetables had different values according to kinds of the vegetables, when green light was emitted onto the vegetables so that the vegetables perform chemical reaction (photosynthesis), mean values of major components of the vegetables, such as moisture, crude protein, crude fiber, and vitamin C, were still high even after the test. Accordingly, it is known that vegetables maintain their freshness for a long time and nutrient degradation of the vegetables is minimized when the vegetables are stored in the vegetable storage chamber of the refrigerator of the present invention.

As apparent from the above description, the present invention provides a refrigerator, which comprises a vegetable storage chamber for maintaining freshness of vegetables stored therein for a long time and minimizing nutrient degradation of the vegetables. Particularly, in a state in which a large quantity of vegetables are stacked and stored in the vegetable storage chamber, sufficient light reaches the vegetables located at inner and lower parts of the vegetable storage chamber, thereby facilitating photosynthesis of the vegetables.

Although a few embodiments of the invention have been shown and described, it would be appreciated by those skilled in the art that changes may be made in these embodiments without departing from the principles and spirit of the invention, the scope of which is defined in the claims and their equivalents.

## Claims

1. A refrigerator comprising:
a vegetable storage chamber to store vegetables;
light emitting diodes (LEDs) to irradiate light onto the vegetables stored in the vegetable storage chamber so that the vegetables photosynthesize; and
a control unit to receive data corresponding to types of the stored vegetables and to control the LEDs so that the LEDs emit light, having characteristics corresponding to the types of the stored vegetables, onto the vegetables.

2. The refrigerator as set forth in claim 1, wherein:
the light emitted from the LEDs is green light; and
the green light has a wavelength of approximately 480-660 nm.

3. The refrigerator as set forth in claim 1, wherein:
the light emitted from the LEDs is red light; and
the red light has a wavelength of approximately 720 nm.

4. The refrigerator as set forth in claim 1, wherein the light emitted from the LEDs comprises different colors according to the types of the vegetables stored in the vegetable storage chamber.

5. The refrigerator as set forth in claim 1, wherein the control unit controls the LEDs so that the LEDs emit light having a wavelength, a light intensity, and an irradiation time corresponding to the types of the stored vegetables.

6. The refrigerator as set forth in claim 1, further comprising a moisture supply device to supply moisture to the vegetables stored in the vegetable storage chamber.

7. The refrigerator as set forth in claim 1, further comprising a light-setting unit to receive data corresponding to the types of the stored vegetables from a user.

8. The refrigerator as set forth in claim 1, wherein the LEDs are arranged on internal surfaces of the vegetable storage chamber to emit light.

9. The refrigerator as set forth in claim 1, wherein the vegetable storage chamber is divided into at least two spaces, and lights at different wavelengths are respectively emitted onto the divided spaces.

10. A refrigerator comprising:
a vegetable storage chamber to store vegetables;
a plurality of different single-colored light emitting diodes (LEDs) to irradiate light onto the vegetables stacked and stored in the vegetable storage chamber so that all the stored vegetables photosynthesize;
a light-setting unit to receive data corresponding to types of the stored vegetables from a user; and
a control unit to receive the data corresponding to the types of the stored vegetables through the light-setting unit and controlling the LEDs so that the LEDs emit lights, having characteristics corresponding to the types of the stored vegetables, onto the vegetables.

11. The refrigerator as set forth in claim 10, wherein:
each of the LEDs is selected from a group consisting of a green-colored LED for irradiating green light and a red-colored LED for irradiating red light;
the green light has a wavelength of approximately 480-660 nm; and
the red light has a wavelength of approximately 720 nm.

12. The refrigerator as set forth in claim 10, wherein the control unit selectively controls at least one type of the LEDs, intensities of lights emitted from the LEDs, and irradiation times of the LEDs, according to the types of the stored vegetables.

13. The refrigerator as set forth in claim 10, further comprising a moisture supply device to supply moisture to the vegetables stored in the vegetable storage chamber.

14. The refrigerator as set forth in claim 10, wherein the LEDs are arranged on at least parts of circumferential surfaces of the vegetable storage chamber.

15. The refrigerator as set forth in claim 10, wherein the vegetable storage chamber is divided into at least two spaces, and the single-colored LEDs for irradiating different lights are respectively installed in the divided spaces.

16. A refrigerator comprising:
a vegetable storage chamber to store vegetables under a condition that the vegetables are stacked;
a plurality of green-colored and red-colored light emitting diodes (LEDs) to irradiate light onto the vegetables stored in the vegetable storage chamber so that nutrients are properly formed in all the stored vegetables;
a light-setting unit to receive data corresponding to types of the stored vegetables from a user; and
a control unit to receive the data corresponding to the types of the stored vegetables through the light-setting unit and to control the LEDs so that the LEDs emit lights at wavelengths, corresponding to the types of the stored vegetables, onto the vegetables.

17. A refrigerator comprising:
a food chamber to store food therein;
light sources to irradiate light onto the food stored in the food chamber; and
a control unit to receive data corresponding to the types of food stored, and to control the light sources to emit light having characteristics corresponding to the types of food stored, onto the food.
